# EUROPÄISCHE PATENTSCHRIFT

(11) **EP 2 926 003 B1**
(45) Veröffentlichungstag und Bekanntmachung des Hinweises auf die Patenterteilung: **08.06.2016**
(21) Anmeldenummer: 13714280.8
(22) Anmeldetag: 03.04.2013
(51) Int. Cl.: F03D 9/00, F03D 80/00, H02J 3/38, F03B 13/00

(54) **VERFAHREN ZUM BETRIEB EINER ENERGIEANLAGE UND EINES ENERGIESYSTEMS MIT SOLCHEN ENERGIEANLAGEN**
METHOD FOR OPERATING AN ENERGY INSTALLATION, AND AN ENERGY SYSTEM COMPRISING SUCH ENERGY INSTALLATIONS
PROCÉDÉ D'EXPLOITATION D'UNE INSTALLATION DE PRODUCTION D'ÉNERGIE ET D'UN SYSTÈME DE PRODUCTION D'ÉNERGIE ÉQUIPÉ D'INSTALLATIONS DE PRODUCTION D'ÉNERGIE DE CE TYPE

(30) Priorität: 27.11.2012 EP 12194453
(43) Veröffentlichungstag der Anmeldung: 07.10.2015
(73) Patentinhaber: ABB Technology AG, 8050 Zürich (CH)
(72) Erfinder: SCHULT, Matthias, CH-5243 Mülligen (CH); FLUM, Dominik, 79809 Weilheim (DE); WEISSENBERGER, Philipp, CH-5210 Windisch (CH); HARDER, Thorsten, CH-5306 Tegerfelden (CH)
(74) Vertreter: ABB Patent Attorneys
(86) Internationale Anmeldenummer: PCT/EP2013/057037
(87) Internationale Veröffentlichungsnummer: WO 2014/082757

(56) Entgegenhaltungen:
- EP-A1- 2 236 821
- WO-A2-01/52379
- DE-A1-102009 017 244
- DE-U1-202004 009 071
- US-A1- 2011 025 058

## Beschreibung

### Technisches Gebiet

Die Erfindung bezieht sich auf das Gebiet der erneuerbaren Energien. Sie geht aus von einem Verfahren zum Betrieb einer Energieanlage sowie von einem Verfahren zum Betrieb eines Energiesystems mit solchen Energieanlagen gemäss dem Oberbegriff der unabhängigen Ansprüche.

### Stand der Technik

Windenergiesysteme, wie sie heute aufgrund schwindender Energieressourcen verstärkt als alternative Energielieferanten eingesetzt werden, werden gängigerweise an Land oder vor der Küste im Meer errichtet. Ein solches Windenergiesystem umfasst typischerweise eine Vielzahl an Windenergieanlagen, die auf unterschiedliche Weise miteinander verbunden sein können. Gezeitenkraftenergiesysteme wiederum werden typischerweise auf dem Meeresboden installiert, wobei der Tidenhub oder die Strömung des Meerwassers als primäre Energiequelle ausgenutzt wird. Ein solches Gezeitenkraftenergiesystem umfasst typischerweise eine Vielzahl an Gezeitenenergieanlagen, die ebenfalls auf unterschiedliche Weise miteinander verbunden sein können.

Allgemein umfasst nun eine Energieanlage wie z.B. in EP 2236821 A1 eine Windkraftturbine oder Wasserkraftturbine, welche mit einem Generator verbunden ist, wobei eine Umrichtereinheit vorgesehen ist, die generatorseitig mit dem Generator verbunden ist und netzseitig mit einem elektrischen Netz verbindbar ist. Die Verbindung der Umrichtereinheit mit einem elektrischen Netz kann direkt oder über einen Transformator, der der Spannungsanpassung dient, erfolgen. Das elektrische Netz kann ein Wechselspannungsnetz oder ein Gleichspannungsnetz sein, wobei im Falle eines Gleichspannungsnetzes der vorstehend genannte Transformator natürlich nicht benötigt wird. Im normalen Betrieb der Energieanlage wird der Generator von der Windkraftturbine oder Wasserkraftturbine angetrieben, wobei die durch den Generator erzeugte elektrische Energie über die Umrichtereinheit in das elektrische Netz eingespeist wird. Die Energieanlage umfasst ferner eine Hilfsenergieeinheit, die beispielsweise der Versorgung der Umrichtersteuerung, der Turbinensteuerung, der Navigationsbeleuchtung im Falle einer Windenergieanlage und der Ölpumpen für die Lagerschmierung der beweglichen Teile der Energieanlage, also allgemein der Deckung des Eigenenergiebedarfs der Energieanlage, dient. Im normalen Betrieb der Energieanlage bezieht die Hilfsenergieeinheit die für die vorstehend genannte Versorgung notwendige elektrische Energie aus dem elektrischen Netz und ist zu diesem Zweck direkt oder über einen Transformator mit dem elektrischen Netz verbunden. Im Falle eines Gleichspannungsnetzes wird dieser Transformator natürlich nicht benötigt wird. Darüberhinaus weist die Energieanlage eine Energiespeichereinheit auf, die beispielsweise als Batterie oder als brennstoffbetriebenes Notstromaggregat ausgebildet sein kann, wobei die Hilfsenergieeinheit mit der Energiespeichereinheit verbunden ist. Im Falle einer Trennung der Energieanlage vom elektrischen Netz, sei es durch einen netzseitigen Fehler oder zu Wartungs- oder Inbetriebnahmezwecken, kann die Hilfsenergieeinheit keine elektrische Energie mehr aus dem elektrischen Netz entnehmen und entnimmt stattdessen die für die vorstehend genannte Versorgung der Energieanlage notwendige elektrische Energie aus der Energiespeichereinheit. Im Falle einer als Batterie ausgebildeten Energiespeichereinheit kann die daraus zu entnehmende elektrische Energie typischerweise nur ungefähr einen Tag bezogen werden. Dieser kurze Zeitraum ist beispielsweise bei Wartungs- oder Inbetriebnahmearbeiten an der Energieanlage nicht akzeptabel. Ist die Energiespeichereinheit als brennstoffbetriebenes Notstromaggregat muss die Brennstoffversorgung stets sichergestellt sein, was aufwendig, ineffizient und kostenintensiv ist.

### Darstellung der Erfindung

Aufgabe der Erfindung ist es deshalb, ein Verfahren zum Betrieb einer Energieanlage anzugeben, welches Verfahren es im Falle einer Trennung der Energieanlage vom elektrischen Netz ermöglicht, dass der Eigenenergiebedarf der Energieanlage während der Trennung mit geringem Aufwand, effizient und kostengünstig, auch über einen längeren Zeitraum, gedeckt werden kann. Diese Aufgabe wird durch die Merkmale des Anspruchs 1 gelöst. Desweiteren ist es Aufgabe der Erfindung, ein Verfahren zum Betrieb eines Energiesystems mit einer Vielzahl an Energieanlagen anzugeben, welches Verfahren es im Falle einer Trennung zumindest eines Teils der Energieanlagen des Energiesystems vom elektrischen Netz ermöglicht, dass der Eigenenergiebedarf jeder abgetrennten Energieanlage mit geringem Aufwand, effizient und kostengünstig, auch über einen längeren Zeitraum, gedeckt werden kann. Diese Aufgabe wird durch die Merkmale des Anspruchs 3 gelöst.

In den abhängigen Ansprüchen sind vorteilhafte Weiterbildungen der Erfindung angegeben.

Beim erfindungsgemässen Verfahren zum Betrieb einer Energieanlage umfasst die Energieanlage eine Windkraftturbine oder Wasserkraftturbine, welche mit einem Generator verbunden ist, eine Umrichtereinheit, die generatorseitig mit dem Generator verbunden ist und eine Hilfsenergieeinheit, die der Bereitstellung von elektrischer Energie zur Deckung des Eigenenergiebedarfs der Energieanlage dient. Gemäss dem erfindungsgemässen Verfahren wird die Umrichtereinheit netzseitig mit einem elektrischen Netz verbunden und durch den Generator erzeugte elektrische Energie über die Umrichtereinheit in das elektrische Netz eingespeist. Desweiteren wird die Hilfsenergieeinheit zum Zwecke des Bezuges elektrischer Energie mit dem elektrischen Netz verbunden, wobei im Falle einer Trennung der Umrichtereinheit und der Hilfsenergieeinheit vom elektrischen Netz die Hilfsenergieeinheit elektrische Energie aus einer Energiespeichereinheit bezieht. Nach der Erfindung erfolgt nun im Falle der Trennung der Umrichtereinheit und der Hilfsenergieeinheit vom elektrischen Netz der Bezug elektrischer Energie der Hilfsenergieeinheit von der Energiespeichereinheit für einen einstellbaren Zeitraum und danach bezieht die Hilfsenergieeinheit durch den Generator erzeugte elektrische Energie über die Umrichtereinheit. Da die für den Eigenenergiebedarf notwendige elektrische Energie im Falle der Trennung der Umrichtereinheit und der Hilfsenergieeinheit vom elektrischen Netz schlussendlich vom Generator bereitgestellt wird, kann der Eigenenergiebedarf der Energieanlage während der Trennung vorteilhaft mit geringem Aufwand, effizient und kostengünstig, auch über einen längeren Zeitraum, gedeckt werden.

Beim Verfahren zum Betrieb eines Energiesystems mit einer Vielzahl an vorstehend genannten Energieanlagen sind die Energieanlagen an ihren Umrichtereinheiten netzseitig seriell miteinander verbunden und auch an ihren Hilfsenergieeinheiten netzseitig seriell miteinander verbunden, wobei die Serienschaltung der Energieanlagen mit einem elektrischen Netz verbunden wird und durch die Generatoren der Energieanlagen erzeugte elektrische Energie über die netzseitig mit dem elektrischen Netz verbundene Umrichtereinheit der Serienschaltung in das elektrische Netz eingespeist wird. Im Falle der Auftrennung der Serienschaltung der Energieanlagen oder der gesamten Trennung der Serienschaltung der Energieanlagen vom elektrischen Netz bezieht die jeweilige Hilfsenergieeinheit einer jeden nicht mehr über Serienschaltung mit dem elektrischen Netz verbundenen Energieanlage elektrische Energie aus einer für jede Energieanlage vorgesehenen Energiespeichereinheit. Erfindungsgemäss erfolgt im Falle der Auftrennung der Serienschaltung der Energieanlagen oder der gesamten Trennung der Serienschaltung der Energieanlagen vom elektrischen Netz für jede nicht mehr über die Serienschaltung mit dem elektrischen Netz verbundenen Energieanlage der Bezug elektrischer Energie der jeweiligen Hilfsenergieeinheit von der zugehörigen Energiespeichereinheit für einen einstellbaren Zeitraum. Danach bezieht dann die jeweilige Hilfsenergieeinheit durch den Generator erzeugte elektrische Energie über die Umrichtereinheit. Im Falle der Auftrennung der Serienschaltung der Energieanlagen, d.h. die Trennung eines Teils der Energieanlagen des Energiesystems vom elektrischen Netz, oder im Falle der gesamten Trennung der Serienschaltung der Energieanlagen vom elektrischen Netz kann der Eigenenergiebedarf einer nicht mehr über die Serienschaltung mit dem elektrischen Netz verbundenen Energieanlage vorteilhaft mit geringem Aufwand, effizient und kostengünstig, auch über einen längeren Zeitraum, gedeckt werden.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit der Zeichnung offensichtlich.

### Kurze Beschreibung der Zeichnungen

Es zeigt:
- Fig. 1: eine Ausführungsform einer Energieanlage und
- Fig. 2: eine Ausführungsform eines Energiesystems mit Energieanlagen gemäss Fig. 1.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

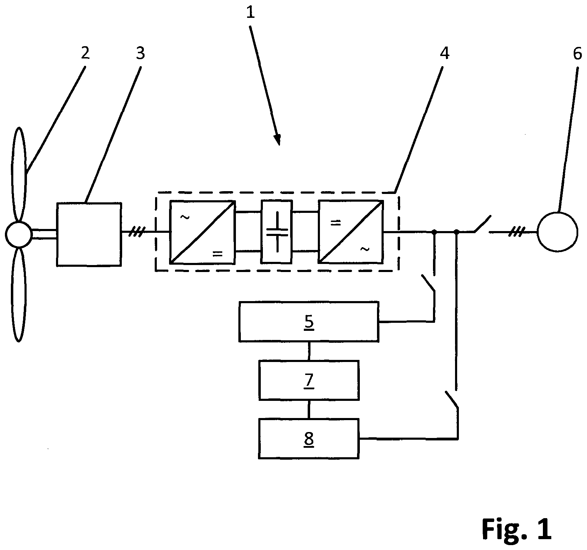

In Fig. 1 ist eine Ausführungsform der erfindungsgemässen Energieanlage (1) dargestellt. Die Energieanalage 1 umfasst eine Windkraftturbine 2, beispielsweise im Falle einer Windenergieanlage, oder eine Wasserkraftturbine 2, beispielsweise im Falle einer Gezeitenkraftenergieanlage, welche mit einem Generator 3, insbesondere mechanisch, beispielsweise über eine Welle, verbunden ist. Darüber hinaus weist die Energieanlage 1 eine Umrichtereinheit 4 auf, die generatorseitig mit dem Generator 3 verbunden ist. Typischerweise ist der Generator 3 als Synchrongenerator ausgebildet, kann aber auch als Asynchrongenerator oder als Gleichstromgenerator ausgebildet sein. Die in Fig. 1 angedeutete Ausführungsform der Umrichtereinheit 4 ist lediglich beispielhaft, d.h. es ist jedwede dem Fachmann bekannte Ausführungsform denkbar, je nachdem welche Art von Generator 3 generatorseitig an die Umrichtereinheit 4 angeschlossen ist und je nachdem welche Art von elektrischem Netz 6, Gleichspannungsnetz oder Wechselspannungsnetz, netzseitig an die Umrichtereinheit 4 angeschlossen ist. Darüber hinaus umfasst die Energieanlage 1 eine Hilfsenergieeinheit 5, die der Bereitstellung von elektrischer Energie zur Deckung des Eigenenergiebedarfs der Energieanlage 1 dient. In Fig. 1 wurden die Verbindungen der Hilfsenergieeinheit 5 zu den zu versorgenden Elementen der Energieanlage 1 aus Gründen der Übersichtlichkeit weggelassen.

Verfahrensmässig wird die Umrichtereinheit 4 netzseitig mit einem elektrischen Netz 6 verbunden und durch den Generator erzeugte elektrische Energie wird über die Umrichtereinheit 4 in das elektrische Netz 6 eingespeist, insbesondere wenn die Windkraftturbine 2 oder die Wasserkraftturbine 2 den Generator 3 antreibt. Ferner wird die Hilfsenergieeinheit 5 zum Zwecke des Bezuges elektrischer Energie mit dem elektrischen Netz 6 verbunden, wobei im Falle einer Trennung der Umrichtereinheit 4 und der Hilfsenergieeinheit 5 vom elektrischen Netz 6 die Hilfsenergieeinheit 5 elektrische Energie aus einer Energiespeichereinheit 7 bezieht. Nach der Erfindung erfolgt im Falle der Trennung der Umrichtereinheit 4 und der Hilfsenergieeinheit 5 vom elektrischen Netz 6 der Bezug elektrischer Energie der Hilfsenergieeinheit 5 von der Energiespeichereinheit 7 für einen einstellbaren Zeitraum, beispielsweise für wenige Stunden, und danach bezieht die Hilfsenergieeinheit 5 durch den Generator 3 erzeugte elektrische Energie über die Umrichtereinheit 4. Der Eigenenergiebedarf der Energieanlage 1, beispielsweise für die Versorgung der Umrichtersteuerung, der Turbinensteuerung, der Navigationsbeleuchtung im Falle einer Windenergieanlage und der Ölpumpen für die Lagerschmierung der beweglichen Teile der Energieanlage 1, wird im Falle der Trennung der Umrichtereinheit 4 und der Hilfsenergieeinheit 5 vom elektrischen Netz 6 schlussendlich vom Generator 2 bereitgestellt wird. Demzufolge kann der Eigenenergiebedarf der Energieanlage 1 während der Trennung vorteilhaft mit geringem Aufwand, effizient und kostengünstig, auch über einen längeren Zeitraum, gedeckt werden.

Es sei an dieser Stelle erwähnt, dass verfahrensmässig die Möglichkeit besteht, im Falle der Trennung der Umrichtereinheit 4 und der Hilfsenergieeinheit 5 vom elektrischen Netz 6 die Windkraftturbine 2 bzw. die Wasserkraftturbine 2 zunächst anzuhalten, insbesondere bis zum Stillstand, und dass dann danach, wie vorstehend beschrieben, die Hilfsenergieeinheit 5 durch den Generator 3 erzeugte elektrische Energie über die Umrichtereinheit 4 bezieht, insbesondere wenn die Windkraftturbine 2 oder die Wasserkraftturbine 2 den Generator 3 dann wieder antreibt.

Die bereits vorstehend genannte Energiespeichereinheit 7 ist vorzugsweise als kapazitiver Energiespeicher oder als Batterie ausgebildet, wobei der kapazitiver Energiespeicher oder die Batterie mit Vorteil von einer Ladeeinheit 8 elektrisch geladen wird. Ist die Umrichtereinheit 4 und die Hilfsenergieeinheit 5 mit dem elektrischen Netz 6 verbunden, so bezieht die Landeeinheit 8 elektrische Energie vorzugsweise vom elektrischen Netz 6 und/oder von einer Photovoltaikeinheit und/oder von einer Windenergieeinheit. Die Photovoltaikeinheit und die Windenergieeinheit dienen somit ausschliesslich der Erzeugung elektrischer Energie für Ladeeinheit 8.

Falls die Umrichtereinheit 4 und die Hilfsenergieeinheit 5, wie vorstehend bereits erwähnt wurde, vom elektrischen Netz 6 getrennt wird, bezieht die Landeeinheit 8 durch den Generator 3 erzeugte elektrische Energie über die Umrichtereinheit 4 und/oder von der besagten Photovoltaikeinheit und/oder von der Windenergieeinheit. Dadurch kann im Falle der Trennung der Umrichtereinheit 4 und der Hilfsenergieeinheit 5 vom elektrischen Netz 6 nun auch die Landeeinheit 8 mittels vom Generator 3 erzeugte elektrische Energie über die Umrichtereinheit 4 und/oder von der Photovoltaikeinheit und/oder von der Windenergieeinheit mit elektrischer Energie versorgt werden, die dann zur Ladung der als kapazitiver Energiespeicher oder als Batterie ausgeführten Energiespeichereinheit 7 verwendet wird.

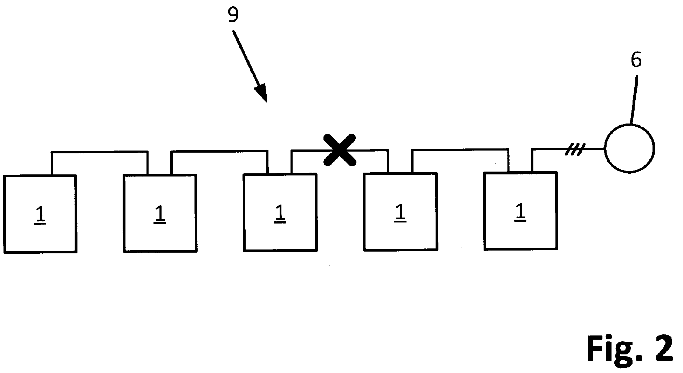

Fig. 2 zeigt eine Ausführungsform eines Energiesystems 9 mit Energieanlagen 1 gemäss Fig. 1, d.h. jede Energieanlage 1 in Fig. 2 ist gemäss der vorstehenden Beschreibung ausgebildet. Gemäss Fig. 2 sind die Energieanlagen 1 bei einem Energiesystem 9 an ihren Umrichtereinheiten 4 netzseitig seriell miteinander verbunden und an ihren Hilfsenergieeinheiten 5 ebenfalls netzseitig seriell miteinander verbunden. Verfahrensmässig wird die Serienschaltung der Energieanlagen 1 mit dem elektrischen Netz 6 verbunden, wobei durch die Generatoren 3 der Energieanlagen 1 erzeugte elektrische Energie über die netzseitig mit dem elektrischen Netz 6 verbundene Umrichtereinheit 4 der Serienschaltung in das elektrische Netz 6 eingespeist wird. Im Falle der Auftrennung der Serienschaltung der Energieanlagen 1, d.h. an einer Stelle zwischen zwei seriell miteinander verbundenen Energieanlagen 1, oder der gesamten Trennung der Serienschaltung der Energieanlagen 1 vom elektrischen Netz 6 bezieht die jeweilige Hilfsenergieeinheit 5 einer jeden nicht mehr über die Serienschaltung mit dem elektrischen Netz 6 verbundenen Energieanlage 1 elektrische Energie aus der für jede Energieanlage 1 vorgesehenen Energiespeichereinheit 7.

Erfindungsgemäss erfolgt im Falle der Auftrennung der Serienschaltung der Energieanlagen 1 oder der gesamten Trennung der Serienschaltung der Energieanlagen 1 vom elektrischen Netz 6 für jede nicht mehr über die Serienschaltung mit dem elektrischen Netz 6 verbundenen Energieanlage 1 der Bezug elektrischer Energie der jeweiligen Hilfsenergieeinheit 5 von der zugehörigen Energiespeichereinheit 7 für einen einstellbaren Zeitraum, beispielsweise für wenige Stunden. Danach bezieht die jeweilige Hilfsenergieeinheit 5 dann durch den Generator 3 der zugehörigen Energieanlage 1 erzeugte elektrische Energie über die Umrichtereinheit 4 der zugehörigen Energieanlage 1.Beispielhaft ist eine mögliche Stelle, an der eine vorstehend genannte Auftrennung stattfinden kann, in Fig. 2 mit einem Kreuz dargestellt. Im Falle der Auftrennung der Serienschaltung der Energieanlagen 1, d.h. die Trennung eines Teils der Energieanlagen 1 des Energiesystems 9 vom elektrischen Netz 6, oder im Falle der gesamten Trennung der Serienschaltung der Energieanlagen 1 vom elektrischen Netz 6 kann der Eigenenergiebedarf einer nicht mehr über die Serienschaltung mit dem elektrischen Netz 6 verbundenen Energieanlage 1 vorteilhaft mit geringem Aufwand, effizient und kostengünstig, auch über einen längeren Zeitraum, beispielsweise viele Stunden oder gar Tage, gedeckt werden.

Vorzugsweise stellt im Falle der Auftrennung der Serienschaltung der Energieanlagen 1 oder der gesamten Trennung der Serienschaltung der Energieanlagen 1 vom elektrischen Netz 6 für jede nicht mehr über die Serienschaltung mit dem elektrischen Netz 6 verbundenen Energieanlage 1 mindestens eine Hilfsenergieeinheit 5 zusätzlich elektrische Energie für mindestens eine andere Energieanlage 1 bereit. Es also somit vorteilhaft möglich, dass beispielsweise eine Hilfsenergieeinheit 5 einer von der Auftrennung oder der gesamtem Trennung betroffenen Energieanlage 1 zusätzlich elektrische Energie für mindestens eine andere ebenfalls abgetrennte Energieanlage 1 bereitstellt.

Wie bereits vorstehend erwähnt, kann die Energiespeichereinheit 7 als kapazitiver Energiespeicher oder als Batterie ausgebildet sein, wobei der kapazitiver Energiespeicher oder die Batterie von einer für jede Energieanlage 1 vorgesehene Ladeeinheit 8 elektrisch geladen wird.

Falls die Serienschaltung der Energieanlagen 1 gemäss Fig. 2 mit dem elektrischen Netz 6 verbunden ist, bezieht die jeweilige Landeeinheit 8 elektrische Energie vom elektrischen Netz 6 und/oder von einer Photovoltaikeinheit und/oder von einer Windenergieeinheit.

Im Falle der Auftrennung der Serienschaltung der Energieanlagen 1 oder der gesamten Trennung der Serienschaltung der Energieanlagen 1 vom elektrischen Netz 6 bezieht für jede nicht mehr über die Serienschaltung mit dem elektrischen Netz 6 verbundenen Energieanlage 1 die jeweilige Landeeinheit 8 durch den Generator 3 erzeugte elektrische Energie über die Umrichtereinheit 4 und/oder von der vorstehend genannten Photovoltaikeinheit und/oder von der besagten Windenergieeinheit. Dadurch kann nun auch die jeweilige von der Auftrennung oder der gesamten Trennung betroffenen Landeeinheit 8 mittels vom Generator 3 erzeugte elektrische Energie über die Umrichtereinheit 4 und/oder von der Photovoltaikeinheit und/oder von der Windenergieeinheit mit elektrischer Energie versorgt werden, die dann zur Ladung der als kapazitiver Energiespeicher oder als Batterie ausgeführten zugehörigen Energiespeichereinheit 7 verwendet wird.

### Bezugszeichenliste

- 1: Energieanlage
- 2: Windkraftturbine oder Wasserkraftturbine
- 3: Generator
- 4: Umrichtereinheit
- 5: Hilfsenergieeinheit
- 6: elektrisches Netz
- 7: Energiespeichereinheit
- 8: Ladeeinheit
- 9: Energiesystem

## Patentansprüche

1. Verfahren zum Betrieb einer Energieanlage (1), wobei die Energieanlage (1) umfasst:
eine Windkraftturbine (2) oder Wasserkraftturbine (2), welche mit einem Generator (3) verbunden ist,
eine Umrichtereinheit (4), die generatorseitig mit dem Generator (3) verbunden ist und
eine Hilfsenergieeinheit (5), die der Bereitstellung von elektrischer Energie zur Deckung des Eigenenergiebedarfs der Energieanlage (1) dient,
bei dem die Umrichtereinheit (4) netzseitig mit einem elektrischen Netz (6) verbunden wird und durch den Generator (3) erzeugte elektrische Energie über die Umrichtereinheit (4) in das elektrische Netz (6) eingespeist wird,
bei dem die Hilfsenergieeinheit (5) zum Zwecke des Bezuges elektrischer Energie mit dem elektrischen Netz (6) verbunden wird, und
bei dem im Falle einer Trennung der Umrichtereinheit (4) und der Hilfsenergieeinheit (5) vom elektrischen Netz (6) die Hilfsenergieeinheit (5) elektrische Energie aus einer Energiespeichereinheit (7) bezieht, und
bei dem im Falle der Trennung der Umrichtereinheit (4) und der Hilfsenergieeinheit (5) vom elektrischen Netz (6) der Bezug elektrischer Energie der Hilfsenergieeinheit (5) von der Energiespeichereinheit (7) für einen einstellbaren Zeitraum erfolgt und danach die Hilfsenergieeinheit (5) durch den Generator (3) erzeugte elektrische Energie über die Umrichtereinheit (4) bezieht,
**dadurch gekennzeichnet,**
**dass** die Energiespeichereinheit (7) als kapazitiver Energiespeicher oder als Batterie ausgebildet ist und der kapazitiver Energiespeicher oder die Batterie von einer Ladeeinheit (8) elektrisch geladen wird, und
**dass** im Falle der Trennung der Umrichtereinheit (4) und der Hilfsenergieeinheit (5) vom elektrischen Netz (6) die Ladeeinheit (8) durch den Generator (3) erzeugte elektrische Energie über die Umrichtereinheit (4) bezieht und/oder von einer Photovoltaikeinheit und/oder von einer Windenergieeinheit bezieht.

2. Verfahren nach Anspruch 1, **dadurch gekennzeichnet, dass** falls die Umrichtereinheit (4) und die Hilfsenergieeinheit (5) mit dem elektrischen Netz (6) verbunden sind die Landeeinheit (8) elektrische Energie vom elektrischen Netz (6) und/oder von einer Photovoltaikeinheit und/oder von einer Windenergieeinheit bezieht.

3. Verfahren zum Betrieb eines Energiesystems (9) mit einer Vielzahl Energieanlagen (1), wobei jede Energieanlage (1) umfasst:
eine Windkraftturbine (2) oder Wasserkraftturbine (2), welche mit einem Generator (3) verbunden ist,
eine Umrichtereinheit (4), die generatorseitig mit dem Generator (3) verbunden ist und eine Hilfsenergieeinheit (5), die der Bereitstellung von elektrischer Energie zur Deckung des Eigenenergiebedarfs der Energieanlage (1) dient,
bei dem die Energieanlagen (1) an ihren Umrichtereinheiten (4) netzseitig seriell miteinander verbunden und an ihren Hilfsenergieeinheiten (5) netzseitig seriell miteinander verbunden sind und die Serienschaltung der Energieanlagen (1) mit einem elektrischen Netz (6) verbunden wird und durch die Generatoren (3) der Energieanlagen (1) erzeugte elektrische Energie über die netzseitig mit dem elektrischen Netz (6) verbundene Umrichtereinheit (4) der Serienschaltung in das elektrische Netz (6) eingespeist wird, und
bei dem im Falle der Auftrennung der Serienschaltung der Energieanlagen (1) oder der gesamten Trennung der Serienschaltung der Energieanlagen (1) vom elektrischen Netz (6) die jeweilige Hilfsenergieeinheit (5) einer jeden nicht mehr über die Serienschaltung mit dem elektrischen Netz (6) verbundenen Energieanlage (1) elektrische Energie aus einer für jede Energieanlage (1) vorgesehenen Energiespeichereinheit (7) bezieht, und
bei dem im Falle der Auftrennung der Serienschaltung der Energieanlagen (1) oder der gesamten Trennung der Serienschaltung der Energieanlagen (1) vom elektrischen Netz (6) für jede nicht mehr über die Serienschaltung mit dem elektrischen Netz (6) verbundenen Energieanlage (1) der Bezug elektrischer Energie der jeweiligen Hilfsenergieeinheit (5) von der zugehörigen Energiespeichereinheit (7) für einen einstellbaren Zeitraum erfolgt und danach die jeweilige Hilfsenergieeinheit (5) durch den Generator (3) erzeugte elektrische Energie über die Umrichtereinheit (4) bezieht,
**dadurch gekennzeichnet,**
**dass** die Energiespeichereinheit (7) als kapazitiver Energiespeicher oder als Batterie ausgebildet ist und der kapazitiver Energiespeicher oder die Batterie von einer für jede Energieanlage (1) vorgesehene Ladeeinheit (8) elektrisch geladen wird, und
**dass** im Falle der Auftrennung der Serienschaltung der Energieanlagen (1) oder der gesamten Trennung der Serienschaltung der Energieanlagen (1) vom elektrischen Netz (6) für jede nicht mehr über die Serienschaltung mit dem elektrischen Netz (6) verbundenen Energieanlage (1) die jeweilige Landeeinheit (8) durch den Generator (3) erzeugte elektrische Energie über die Umrichtereinheit (4) bezieht und/oder von einer Photovoltaikeinheit und/oder von einer Windenergieeinheit bezieht.

4. Verfahren nach Anspruch 3, **dadurch gekennzeichnet, dass** im Falle der Auftrennung der Serienschaltung der Energieanlagen (1) oder der gesamten Trennung der Serienschaltung der Energieanlagen (1) vom elektrischen Netz (6) für jede nicht mehr über die Serienschaltung mit dem elektrischen Netz (6) verbundenen Energieanlage (1) mindestens eine Hilfsenergieeinheit (5) zusätzlich elektrische Energie für mindestens eine andere Energieanlage (1) bereitstellt.

5. Verfahren nach Anspruch 3, **dadurch gekennzeichnet, dass** falls die Serienschaltung der Energieanlagen (1) mit dem elektrischen Netz (6) verbunden ist die jeweilige Landeeinheit (8) elektrische Energie vom elektrischen Netz (6) und/oder von einer Photovoltaikeinheit und/oder von einer Windenergieeinheit bezieht.

## Claims

1. Method for operating an energy installation (1), wherein the energy installation (1) comprises:
a wind turbine (2) or water turbine (2), which is connected to a generator (3),
a converter unit (4), which is connected on the generator side to the generator (3), and
an auxiliary energy unit (5), which is used to provide electrical energy to cover the intrinsic energy demand of the energy installation (1),
in which the converter unit (4) is connected on the grid side to an electric power grid (6) and feeds electrical energy generated by the generator (3) into the electric power grid (6) via the converter unit (4),
in which the auxiliary energy unit (5) is connected to the electric power grid (6) for the purpose of drawing electrical energy, and
in which, in the event of a separation of the converter unit (4) and of the auxiliary energy unit (5) from the electric power grid (6), the auxiliary energy unit (5) draws electrical energy from an energy storage unit (7), and
in which, in the event of the separation of the converter unit (4) and of the auxiliary energy unit (5) from the electric power grid (6), the auxiliary energy unit (5) draws electrical energy from the energy storage unit (7) for an adjustable period of time, and
the auxiliary energy unit (5) then draws electrical energy generated by the generator (3) via the converter unit, (4)
**characterized in that**
the energy storage unit (7) is formed as a capacitive energy store or as a battery and the capacitive energy store or the battery is electrically charged by a charging unit (8), and
in the event of the separation of the converter unit (4) and of the auxiliary energy unit (5) from the electric power grid (6), the charging unit (8) draws electrical energy generated by the generator (3) via the converter unit (4) and/or draws from a photovoltaic unit and/or from a wind energy unit.

2. Method according to Claim 1, **characterized in that**, in the event that the converter unit (4) and the auxiliary energy unit (5) are connected to the electric power grid (6), the charging unit (8) draws electrical energy from the electric power grid (6) and/or from a photovoltaic unit and/or from a wind energy unit.

3. Method for operating an energy system (9) comprising a plurality of energy installations (1), wherein each energy installation (1) comprises:
a wind turbine (2) or water turbine (2), which is connected to a generator (3),
a converter unit (4), which is connected on the generator side to the generator (3), and
an auxiliary energy unit (5), which is used to provide electrical energy to cover the intrinsic energy demand of the energy installation (1),
in which the energy installations (1) are connected to one another in series at their converter units (4) on the grid side and are connected to one another in series at their auxiliary energy units (5) on the grid side, and the series connection of the energy installations (1) is connected to an electric power grid (6) and electrical energy generated by the generators (3) of the energy installations (1) is fed into the electric power grid (6) via the converter unit (4) of the series connection connected on the grid side to the electric power grid (6), and
in which, in the event of the disconnection of the series connection of the energy installations (1) or the total separation of the series connection of the energy installations (1) from the electric power grid (6), the respective auxiliary energy unit (5) of each energy installation (1) no longer connected to the electric power grid (6) via the series connection draws electrical energy from an energy storage unit (7) provided for each energy installation (1), and
in which, in the event of the disconnection of the series connection of the energy installations (1) or the total separation of the series connection of the energy installations (1) from the electric power grid (6), the respective auxiliary energy unit (5), for each energy installation (1) no longer connected to the electric power grid (6) via the series connection, draws electrical energy from the associated energy storage unit (7) for an adjustable period of time, and then the respective auxiliary energy unit (5) draws electrical energy generated by the generator (3) via the converter unit (4),
**characterized in that**
the energy storage unit (7) is formed as a capacitive energy store or as a battery and the capacitive energy store or the battery is electrically charged by a charging unit (8) provided for each energy installation (1), and
**in that**, in the event of the disconnection of the series connection of the energy installations (1) or the total separation of the series connection of the energy installations (1) from the electric power grid (6), the respective charging unit (8), for each energy installation (1) no longer connected to the electric power grid (6) via the series connection, draws electrical energy generated by the generator (3) via the converter unit (4) and/or draws from a photovoltaic unit and/or from a wind energy unit.

4. Method according to Claim 3, **characterized in that**, in the case of the disconnection of the series connection of the energy installations (1) or the total separation of the series connection of the energy installations (1) from the electric power grid (6), at least one auxiliary energy unit (5), for each energy installation (1) no longer connected to the electric power grid (6) via the series connection, additionally provides electrical energy for at least one other energy installation (1).

5. Method according to Claim 3, **characterized in that** in the event that the series connection of the energy installations (1) is connected to the electric power grid (6), the respective charging unit (8) draws electrical energy from the electric power grid (6) and/or from a photovoltaic unit and/or from a wind energy unit.

## Revendications

1. Procédé pour faire fonctionner un équipement de production d'énergie (1), l'équipement de production d'énergie (1) comprenant :
une turbine à énergie éolienne (2) ou une turbine à énergie hydraulique (2) qui est reliée à un générateur (3),
une unité onduleur (4) qui, du côté du générateur, est raccordée au générateur (3) et une unité d'énergie auxiliaire (5) qui sert à la fourniture d'énergie électrique en vue de couvrir le besoin en énergie propre de l'équipement de production d'énergie (1),
procédé selon lequel l'unité onduleur (4), du côté du réseau, est raccordée à un réseau électrique (6) et l'énergie électrique produite par le générateur (3) est injectée dans le réseau électrique (6) par le biais de l'unité onduleur (4),
procédé selon lequel l'unité d'énergie auxiliaire (5) est raccordée au réseau électrique (6) à des fins d'approvisionnement en énergie électrique, et
procédé selon lequel, dans le cas d'une déconnexion de l'unité onduleur (4) et de l'unité d'énergie auxiliaire (5) du réseau électrique (6), l'unité d'énergie auxiliaire (5) approvisionne de l'énergie électrique depuis une unité d'accumulation d'énergie (7), et
procédé selon lequel, dans le cas de la déconnexion de l'unité onduleur (4) et de l'unité d'énergie auxiliaire (5) du réseau électrique (6), l'approvisionnement en énergie électrique de l'unité d'énergie auxiliaire (5) depuis l'unité d'accumulation d'énergie (7) s'effectue pendant une période réglable et ensuite l'unité d'énergie auxiliaire (5) approvisionne l'énergie électrique produite par le générateur (3) par le biais de l'unité onduleur (4),
**caractérisé en ce**
**que** l'unité d'accumulation d'énergie (7) est réalisée sous la forme d'un accumulateur d'énergie capacitif ou sous la forme d'une batterie et l'accumulateur d'énergie capacitif ou la batterie est chargé électriquement par une unité de charge (8), et
**que** dans le cas de la déconnexion de l'unité onduleur (4) et de l'unité d'énergie auxiliaire (5) du réseau électrique (6), l'unité de charge (8) approvisionne l'énergie électrique produite par le générateur (3) par le biais de l'unité onduleur (4) et/ou depuis une unité photovoltaïque et/ou depuis une unité à énergie éolienne.

2. Procédé selon la revendication 1, **caractérisé en ce que** dans le cas où l'unité onduleur (4) et l'unité d'énergie auxiliaire (5) sont raccordées au réseau électrique (6), l'unité de charge (8) approvisionne l'énergie électrique depuis le réseau électrique (6) et/ou depuis une unité photovoltaïque et/ou depuis une unité à énergie éolienne.

3. Procédé pour faire fonctionner un système de production d'énergie (9) comprenant une pluralité d'équipements de production d'énergie (1), chaque équipement de production d'énergie (1) comprenant :
une turbine à énergie éolienne (2) ou une turbine à énergie hydraulique (2) qui est reliée à un générateur (3),
une unité onduleur (4) qui, du côté du générateur, est raccordée au générateur (3) et une unité d'énergie auxiliaire (5) qui sert à la fourniture d'énergie électrique en vue de couvrir le besoin en énergie propre de l'équipement de production d'énergie (1),
procédé selon lequel les équipements de production d'énergie (1) sont branchés en série les uns avec les autres du côté du réseau au niveau de leurs unités onduleur (4) et sont branchés en série les uns avec les autres du côté du réseau au niveau de leurs unités d'énergie auxiliaire (5), et le circuit série des équipements de production d'énergie (1) est raccordé à un réseau électrique (6) et l'énergie électrique produite par les générateurs (3) des équipements de production d'énergie (1) est injectée dans le réseau électrique (6) par le biais de l'unité onduleur (4) du circuit série qui est raccordée au réseau électrique (6) du côté du réseau, et
procédé selon lequel, dans le cas de la déconnexion du circuit série des équipements de production d'énergie (1) ou de la déconnexion commune du circuit série des équipements de production d'énergie (1) du réseau électrique (6), l'unité d'énergie auxiliaire (5) de chaque équipement de production d'énergie (1) qui n'est plus raccordé au réseau électrique par le biais du circuit série approvisionne de l'énergie électrique depuis une unité d'accumulation d'énergie (7) prévue pour chaque équipement de production d'énergie (1), et
procédé selon lequel, dans le cas de la déconnexion du circuit série des équipements de production d'énergie (1) ou de la déconnexion commune du circuit série des équipements de production d'énergie (1) du réseau électrique (6), pour chaque équipement de production d'énergie (1) qui n'est plus raccordé au réseau électrique (6) par le biais du circuit série,
l'approvisionnement en énergie électrique de l'unité d'énergie auxiliaire (5) correspondante depuis l'unité d'accumulation d'énergie associée (7) s'effectue pendant une période réglable et ensuite l'unité d'énergie auxiliaire (5) correspondante approvisionne l'énergie électrique produite par le générateur (3) par le biais de l'unité onduleur (4),
**caractérisé en ce**
**que** l'unité d'accumulation d'énergie (7) est réalisée sous la forme d'un accumulateur d'énergie capacitif ou sous la forme d'une batterie et l'accumulateur d'énergie capacitif ou la batterie est chargé électriquement par une unité de charge (8) prévue pour chaque équipement de production d'énergie (1), et
**que** dans le cas de la déconnexion du circuit série des équipements de production d'énergie (1) ou de la déconnexion commune du circuit série des équipements de production d'énergie (1) du réseau électrique (6), pour chaque équipement de production d'énergie (1) qui n'est plus raccordé au réseau électrique (6) par le biais du circuit série, l'unité de charge (8) correspondante approvisionne l'énergie électrique produite par le générateur (3) par le biais de l'unité onduleur (4) et/ou depuis une unité photovoltaïque et/ou depuis une unité à énergie éolienne.

4. Procédé selon la revendication 3, **caractérisé en ce que** dans le cas de la déconnexion du circuit série des équipements de production d'énergie (1) ou de la déconnexion commune du circuit série des équipements de production d'énergie (1) du réseau électrique (6), pour chaque équipement de production d'énergie (1) qui n'est plus raccordé au réseau électrique (6) par le biais du circuit série, au moins une unité d'énergie auxiliaire (5) délivre de l'énergie électrique supplémentaire pour au moins un autre équipement de production d'énergie (1).

5. Procédé selon la revendication 3, **caractérisé en ce que** dans le cas où le circuit série des équipements de production d'énergie (1) est raccordé au réseau électrique (6), l'unité de charge (8) correspondante approvisionne l'énergie électrique depuis le réseau électrique (6) et/ou depuis une unité photovoltaïque et/ou depuis une unité à énergie éolienne.
